# EUROPÄISCHE PATENTSCHRIFT

(11) **EP 0 529 151 B1**
(45) Veröffentlichungstag und Bekanntmachung des Hinweises auf die Patenterteilung: **08.03.1995**
(21) Anmeldenummer: 91122132.3
(22) Anmeldetag: 23.12.1991
(51) Int. Cl.: B05B 15/12, B05B 15/04

(54) **Wassersammelbecken einer Spritzkabine**
Water collection tank for a spray booth
Bac de récupération d'eau pour cabine de pulvérisation

(30) Priorität: 24.08.1991 DE 9110515 U
(43) Veröffentlichungstag der Anmeldung: 03.03.1993
(73) Patentinhaber: Ipsen, Harald, D-64832 Babenhausen (DE)
(72) Erfinder: Ipsen, Harald, D-64832 Babenhausen (DE)
(74) Vertreter: Hanke, Hilmar

(56) Entgegenhaltungen:
- DE-U- 8 808 933
- US-A- 2 981 525

## Beschreibung

Die Erfindung betrifft ein Wassersammelbecken unter einer wasserbefluteten Wand einer Spritzkabine oder eines Spritzstands zur Auswaschung von Farbnebel bei einem Lackiervorgang, mit einem abflußseitigen Querkanal, der an eine querüberflutete Strömungskante des Wassersammelbeckens angrenzt und eine Abflußschräge sowie einen Beruhigungsströmungsabschnitt mit Wasserauslaß besitzt.

Es sind Geräte zur Entfernung von Lackschlamm aus dem Berieselungswasser von Lackspritzanlagen bekannt, bei denen sich die zu lackierenden Teile vor einer als Spritzwand bezeichneten Fläche befinden und mit Lack besprüht werden. Zwischen der erwähnten Spritzwand und dem zu lackierenden Teil sind in aller Regel Berieselungsvorrichtungen derart angeordnet, daß ein Vorhang aus herabrieselndem Wasser gebildet wird, der die Lackteilchen wegschwemmt, die beim Spritzlackiervorgang an dem zu lackierenden Teil vorbeifliegen, aufgefangen und in geordneter Weise beseitigt werden müssen. Es ist üblich, daß dem als Vorhang herabrieselndem Wasser direkt oder erst im unteren Wassersammelbecken Koaguliermittel zugesetzt werden, damit ein nichtklebender Schlamm gebildet wird, bestehend aus Lackpartikeln, Wasser und dem vorgenannten Koaguliermittel. Dadurch wird die Entfernung des Lackschlamms generell erleichtert. Wie sich die Lackpartikel in dem Lackschlamm absetzen, hängt von der Größe der Lackpartikel und vom gesamten Lacksystem ab. Es gibt Lacke, die spezifisch schwerer und andere, die spezifisch leichter als Wasser sind. Bei der Zerstäubung wird immer etwas Luft in die Lackpartikel eingeschlossen. Diese Luft bewirkt, daß auch spezifisch schwerere Lacke zunächst schwimmen. Die Luft wie auch die Lösemittel im Lacktröpfchen entweichen je nach Lackart ca. 5 bis 15 Minuten, nachdem der Lacknebel in das Berieselungswasser gelangt. Das bedeutet, daß in dieser Zeit der Lackschlamm der Absaugeinrichtung zugeführt werden muß.

Aufbauend auf dem vorgenannten Stand der Technik sieht nun ein vergleichsweise einfach aufgebautes Wassersammelbecken für eine Trennung bzw. Entklebung von Lacken vor, dem Wassersammelbecken einen abflußseitigen Querkanal der eingangs genannten Art anzuschließen, der eine Abflußschräge und eine Beruhigungszone mit langsam fließender Beruhigungsströmung besitzt und verlgeichsweise tief ausgebildet ist.

Aufgabe der Erfindung ist, das Wassersammelbecken der eingangs genannten, aus DE-U-88 08 933 bekannten Art dahingehend weiter zu verbessern, daß mit Hilfe sehr einfacher Mittel die Entklebung praktisch aller Lacke bzw. die Trennung der Lackteilchen aus dem Wasser weiter verbessert wird.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Mittel der Unteransprüche 2 bis 11.

Wesen der Erfindung ist, daß der Querkanal nicht wie nach dem vorgenannten Stand der Technik tief, sondern großenteils mit einem im wesentlichen horizontalen Flachströmungsabschnitt (vor der Abflußschräge und dem wasserausgangsseitigen Beruhigungsströmungsabschnitt) ausgebildet wird. Der Flachströmungsabschnitt kann vorteilhafterweise ein in den Querkanal eingesetzter "Zwischenboden" bzw. ein erster horizontaler Strömungsleitkörper sein, der sich in Strömungsrichtung erweitert. Trotz horizontaler Ausrichtung des Flachströmungsabschnitts wird aufgrund der nachfolgenden Abflußschräge und des Wasserauslasses am Ende des Querkanals eine definierte Horizontalströmung geringer Tiefe eingerichtet. Aufgrund der geringen Tiefe können von der vorgelagerten querüberfluteten höhergelegenen Strömungskante des Wassersammelbeckens die im Wasser enthaltenen Lackpartikel auch nicht in eine große Tiefe in den Querkanal eintauchen. Die Lackpartikel, die grundsätzlich aufgrund der Zerstäubung bei einem Lackspritzvorgang Luft enthalten, verbleiben vielmehr im Bereich der Wasseroberfläche im Querkanal. Die Erfindung nützt die Erkenntnis aus, daß Luft enthaltende Lackpartikel an der Wasseroberfläche einen größeren Auftrieb besitzen als in größerer Wassertiefe. In größerer Wassertiefe bewirkt nämlich der statische Wasserdruck eine Komprimierung der Luft in den Lackpartikeln, was mit einer Volumenverkleinerung und demzufolge einer Auftriebsverringerung einhergeht. Obgleich also "nur" eine flache Strömung mit vergleichsweiser großer Strömungsgeschwindigkeit eingerichtet wird, verbleiben die abzuscheidenden Lackpartikel gleichwohl an der Oberfläche aufgrund des erhöhten Auftriebs. Sie können mit einfachen vorzugsweise mechanischen Mitteln, z.B. Querschiebern. aus dem dann gereinigten Wasser leicht entfernt werden. Die in Strömungsrichtung nachgeordnete Abflußschräge und dann größere Wassertiefe des Querkanals ist hierbei unschädlich. da dort durch den vorgelagerten Flachströmungsabschnitt mit vergleichsweise großer Strömungsgeschwindigkeit eine definierte Lackpartikelströmung an der Wasseroberfläche eingerichtet ist. Bei Verwendung eines Lackkoaguliermittels zur erleichterten Trennung des Lacks aus dem Wasser sind die chemischen Substanzen so gewählt, daß die Oberflächenspannung der Lackpartikel nicht verringert wird, die Luftbläschen nicht entweichen können und mithin der Auftrieb nicht geschmälert wird.

Erfindungsgemäß ist mithin eine definierte Querkanal- bzw. Beckenkonfiguration vorgesehen, die bewirkt, daß im Wasser befindliche Lacke an der Oberfläche gut aufschwimmen und somit darunter sauberes Wasser fließt, welches ohne Filter im Umlauf bleiben kann. Der aufschwimmende Lack kann an der Oberfläche auch leicht abgesaugt werden.

Die Erfindung wird nachfolgend anhand von Ausführungsbeispielen unter Bezugnahme auf die beigefügte Zeichnung näher erläutert; es zeigen:
- Fig. 1: in schematischer perspektivischer Ansicht einen Teil einer Spritzkabine mit einem die Erfindung enthaltenden Wassersammelbecken,
- Fig. 2: eine schematische Draufsicht auf das Wassersammelbecken einschließlich Querkanal,
- Fig. 3: einen schematischen Schnitt längs der Linie A'-A' der Fig. 2,
- Fig. 4: einen Schnitt längs der Linie B'-B' der Fig. 2, und
- Fig. 5: ein Unterflur-Wassersammelbecken mit der Erfindung ähnlich Fig. 1.

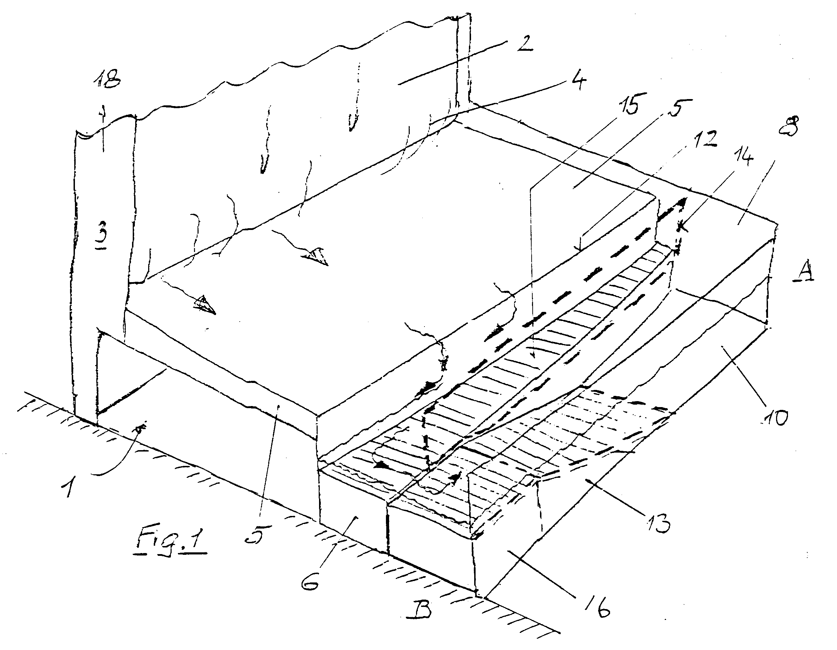

In Fig. 1 ist eine an sich bekannte Spritzkabine 3 zur Absaugung und Abscheidung von Farbnebel bei einem Lackiervorgang gezeigt. Die Spritzkabine 3 umfaßt eine wasserbeflutete Wand 2 sowie ein darunterliegendes Wassersammelbecken 1, wobei hinter der wasserbefluteten Wand 2 in der Spritzkabine 3 eine Auswaschzone für den Farbnebel vorgesehen ist. Der bei einem Lackieren entstehende überschüssige Farbnebel 4 wird an der Wasserwand nach unten gespült und in die Spritzkabine 3 mit Hilfe einer kabineninneren Absaugeinrichtung 18 eingesaugt. In der Kabine wird der Farbnebel durch Spritzdüsen bei gleichzeitiger Entklebung ausgewaschen und gelangt in das untere Wassersammelbecken 1.

Das Wassersammelbecken 1 umfaßt einen horizontalen (dritten) Strömungsleitkörper 5 zwecks Ausbildung einer definierten Oberflächenströmung in Querrichtung zur wasserbefluteten Wand 2 und zwecks zusätzlicher Wasservermischung und Entklebung unter Zugabe von Koaguliermittel. Der Strömungsleitkörper 5 ist ein abgekantetes Blech mit einer Breitenerstreckung entsprechend der Wasserwand bzw. der gesamten Breite des Wassersammelbeckens 1. Im vordersten Bereich des Wassersammelbeckens 1 besitzt der Strömungsleitkörper 5 eine horizontale querüberflutete Strömungskante 12, welche zu einem oben offenen quaderförmigen Querkanal 8 führt, der sich dicht an das eigentliche Wassersammelbecken 1 über die gesamte Beckenbreite anschließt.

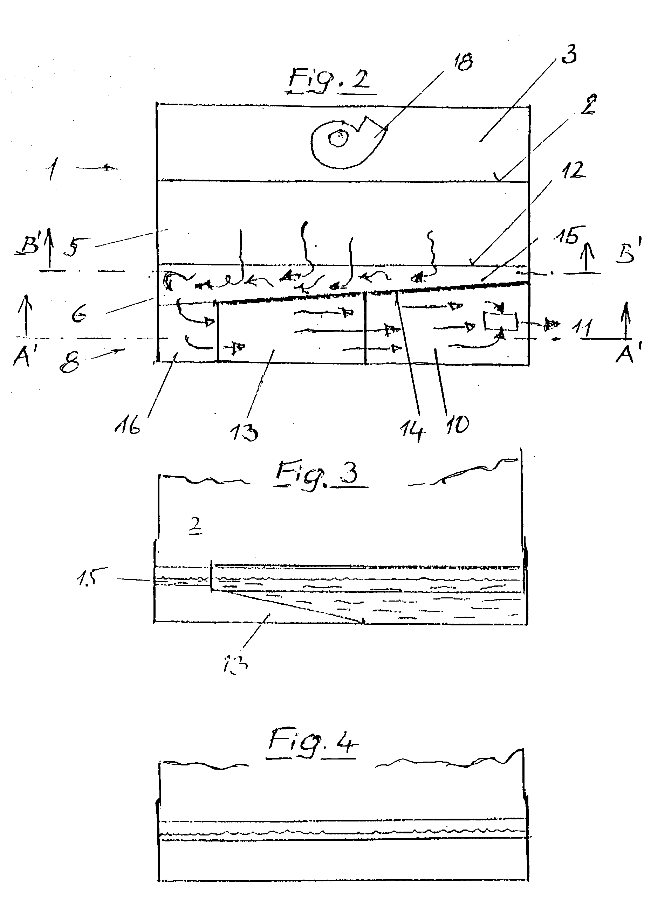

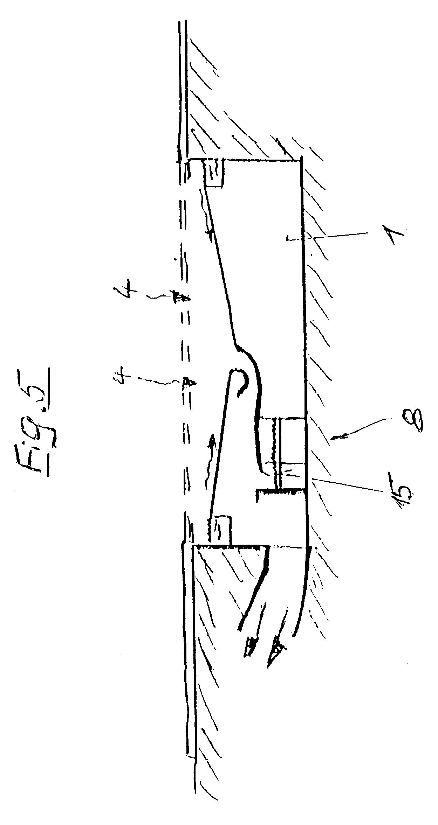

Der Querkanal 8 ist in Fig. 1 in perspektivischer und in Schnittansichten in den Fig. 2 bis 4 gezeigt. Er besitzt - gesehen in Strömungsrichtung des Wassers - im Anschluß an die querüberflutete Strömungskante 12 einen etwas tiefer gelegenen Flachströmungsabschnitt 15 parallel zur querüberfluteten Strömungskante 12, wobei sich der Flachströmungsabschnitt über die gesamte Breite des Wassersammelbeckens 1 erstreckt. Die Wassertiefe beträgt in einem praktischen Ausführungsbeispiel ca. 10 mm. Der Flachströmungsabschnitt 15 wird insbesondere durch einen ersten Strömungsleitkörper 6 gebildet, welcher quer zum dritten Strömungsleitkörper 5 des eigentlichen Wassersammelbeckens 1 an tieferer Stelle gelegen ist. In Strömungsrichtung des Wassers ist der erste Strömungsleitkörper 6 konisch erweitert, wobei eine vertikale schrägverlaufende Zwischenwand 14 im Quader des Querkanals 8 eingesetzt ist, wie dies insbesondere der Fig.1 zu entnehmen ist. Die Zwischenwand 14 erstreckt sich bis kurz vor das Wasserumlenkende B.

Nach dem Wasserumlenkende B befindet sich - gesehen in Wasserströmungsrichtung - ein weiterer Flachströmungsabschnitt in Form eines zweiten Strömungsleitkörpers 16, welcher die gleiche horizontale Erstreckung in gleicher Höhe wie der erste Strömungsleitkörper 6 besitzt. Letztgenannter zweiter Strömungsleitkörper 16 sorgt für eine definierte Flachströmung, welche der erstgenannten Flachströmung auf dem ersten Strömungsleitkörper 6 entgegengerichtet ist. Auch letztgenannte Flachströmung ist in Strömungsrichtung konisch erweitert aufgrund der Ausbildung der Zwischenwand 14.

Dem zweiten Strömungsleitkörper 16 schließt sich eine an sich bekannte Abflußschräge 13 an, um im hinteren seitlichen Endbereich A des Querkanals 8 auf der dem Wasserumlenkende B entgegengesetzten Seite einen Beruhigungsströmungsabschnitt 10 mit vergleichsweise großer Wassertiefe auszubilden. Im Bereich des seitlichen Endbereichs A befindet sich auch der Wasserauslaß 11 in Form eines Überlauftrichters, wie er beispielsweise aus DE-GM 87 02 677 bekannt ist.

Ersichtlich wird also mit einfachen Mitteln ein kompakter Querkanal mit großem Durchströmungsbereich geschaffen. Der Durchströmungsbereich ist über große Teile flach gewählt und weist eine konische Erweiterung in Strömungsrichtung auf. Der großenteils flache horizontale Strömungsbereich gestattet einen großen Auftrieb der Luft enthaltenden Lackteilchen, die leicht von der Wasseroberfläche abgesaugt oder anderweitig entfernt werden können. Gleichwohl besitzt der Querkanal 8 wasserausgangsseitig die gewünschte Beruhigungszone 10.

## Patentansprüche

1. Wassersammelbecken (1) unter einer wasserbefluteten Wand (2) einer Spritzkabine (3) oder eines Spritzstands zur Auswaschung von Farbnebel (4) bei einem Lackiervorgang, mit einem abflußseitigen Querkanal (8), der an eine querüberflutete Strömungskante (12) des Wassersammelbeckens (1) angrenzt und eine Abflußschräge (13) sowie einen Beruhigungsströmungsabschnitt (10) mit Wasserauslaß (11) besitzt,
dadurch gekennzeichnet,
daß der Querkanal (8) zumindest im wassereingangsseitigen querüberfluteten Bereich der Strömungskante (12) mit einem im wesentlichen horizontalen Flachströmungsabschnitt (15) ausgebildet ist, dem sich die Abflußschräge (13) anschließt.

2. Wassersammelbecken nach Anspruch 1,
dadurch gekennzeichnet,
daß im Querkanal (8) angrenzend an die querüberflutete Strömungskante (12) als Flachströmungsabschnitt (15) ein erster im wesentlicher horizontaler Strömungsleitkörper (6) mit einer konischen Erweiterung in Wasserströmungsrichtung im wesentlichen bis zum einen (Wasserumlenk-) Ende (B) des Querkanals (8) angeordnet ist.

3. Wassersammelbecken nach Anspruch 2,
dadurch gekennzeichnet,
daß im Querkanal (8) nach dem (Wasserumlenk-)Ende (B) als zusätzlicher Flachströmungsabschnitt (15) ein weiterer im wesentlichen horizontaler Strömungsleitkörper (16) angeordnet ist, der mit der Ablaufschräge (13) verbunden ist.

4. Wassersammelbecken nach Anspruch 3,
dadurch gekennzeichnet,
daß erster und zweiter Strömungsleitkörper (6, 16) im wesentlichen auf gleicher Höhe gelegen sind.

5. Wassersammelbecken nach Anspruch 3 oder 4,
dadurch gekennzeichnet,
daß erster und zweiter Strömungsleitkörper (6, 16) sowie Abflußschräge (13) unterseitig ausgeschäumt sind.

6. Wassersammelbecken nach einem der Ansprüche 3 bis 5,
dadurch gekennzeichnet,
daß erster und zweiter Strömungsleitkörper (6, 16) sowie Abflußschräge (13) einstückig ausgebildet sind.

7. Wassersammelbecken nach einem der Ansprüche 1 bis 6,
dadurch gekennzeichnet,
daß Abflußschräge und Beruhigungsströmungsabschnitt (10) im Bereich des Querkanalendes (A) des Wasserauslasses (11) gelegen sind, welches dem (Wasserumlenk-)Ende (B) des Querkanals (8) abgewandt ist.

8. Wassersammelbecken nach Anspruch 7,
dadurch gekennzeichnet,
daß Abflußschräge (13) und Beruhigungsströmungsabschnitt (10) in Wasserströmungsrichtung konisch erweitert ausgebildet sind.

9. Wassersammelbecken nach einem der Ansprüche 1 bis 8,
dadurch gekennzeichnet, daß der Wasserauslaß (11) ein Überlauftrichter ist.

10. Wassersammelbecken nach einem der Ansprüche 1 bis 9,
dadurch gekennzeichnet, daß die querüberflutete Strömungskante (12) Teil eines dritten im wesentlichen horizontalen Flachströmungsabschnitts bzw. eines dritten im wesentlichen horizontalen Strömungsleitkörpers (5) im Wassersammelbecken (1) ist, der quer zum Querkanal (8) verläuft.

11. Wassersammelbecken nach einem der Ansprüche 1 bis 10,
dadurch gekennzeichnet, daß der Querkanal (8) als quaderförmiges offenes Becken mit vertikaler Zwischenwand (14) ausgebildet ist, welche den Beruhigungsströmungsabschnitt (10) und die Abflußschräge (13) vom ersten Flachströmungsabschnitt (15) bzw. ersten Strömungsleitkörper (6) abtrennt.

## Claims

1. Water collection tank (1) below a wall (2) of a spray booth (3) or of a spray stall, which wall is flooded with water, in order to wash away paint mist (4) during a painting process, having, on the drainage side, a transverse channel (8) which adjoins a transversely overflowed flow edge (12) of the water collection tank (1) and comprises a drainage slope (13) and a settling flow portion (10) with a water outlet (11), characterized in that the transverse channel (8) is formed, at least in the transversely overflowed region of the flow edge (12) on the water inlet side, with a substantially horizontal flat flow portion (15) which the drainage slope (13) adjoins.

2. Water collection tank according to Claim 1, characterized in that a first substantially horizontal flow deflector member (6) having, in the direction in which the water flows, a conical widening substantially as far as a (water-deflecting) end (B) of the transverse channel (8) is disposed in the transverse channel (8) adjoining the transversely overflowed flow edge (12) as a flat flow portion (15).

3. Water collection tank according to Claim 2, characterized in that a further substantially horizontal flow deflector member (16) which is connected to the drainage slope (13) is disposed in the transverse channel (8) downstream of the (water-deflecting) end (B) as an additional flat flow portion (15).

4. Water collection tank according to Claim 3, characterized in that the first and second flow deflector members (6, 16) are disposed substantially at the same level.

5. Water collection tank according to Claim 3 or 4, characterized in that the first and second flow deflector members (6, 16) and the drainage slope (13) are foamed out on the underside.

6. Water collection tank according to any one of Claims 3 to 5, characterized in that the first and second flow deflector members (6, 16) and the drainage slope (13) are formed in one part.

7. Water collection tank according to any one of Claims 1 to 6, characterized in that the drainage slope and settling flow portion (10) are disposed in the vicinity of the transverse channel end (A) of the water outlet (11) which is remote from the (water-deflecting) end (B) of the transverse channel (8).

8. Water collection tank according to Claim 7, characterized in that the drainage slope (13) and settling flow portion (10) are formed such that they widen conically in the direction in which the water flows.

9. Water collection tank according to any one of Claims 1 to 8, characterized in that the water outlet (11) is an over-flow funnel.

10. Water collection tank according to any one of Claims 1 to 9, characterized in that the transversely overflowed flow edge (12) is part of a third substantially horizontal flat flow portion or of a third substantially horizontal flow deflector member (5), in the water collection tank (1), which extends transversely to the transverse channel (8).

11. Water collection tank according to any one of Claims 1 to 10, characterized in that the transverse channel (8) is in the form of a cuboid open tank with a vertical intermediate wall (14) which separates the settling flow portion (10) and the drainage slope (13) from the first flat flow portion (15) or first flow deflector member (6).

## Revendications

1. Bac de récupération d'eau (1) au-dessous d'une paroi (2) inondée d'eau d'une cabine de pulvérisation (3) ou d'un poste de pulvérisation, servant à l'enlèvement par lavage du brouillard de peinture (4) dans une opération de laquage, ledit bas présentant, du côté de l'écoulement, un canal transversal (8) qui est contigu à une arête d'écoulement (12) du bac de récupération franchie transversalement par l'eau et qui comporte un plan incliné d'écoulement (13) ainsi qu'une zone de stabilisation du courant (10) avec une évacuation d'eau (11),
caractérisé en ce que le canal transversal (8) est réalisé, au moins dans la région de l'arête d'écoulement (12) franchie transversalement du côté de l'entrée d'eau, avec une zone d'écoulement en surface (15) qui est pratiquement horizontale et à laquelle fait suite le plan incliné d'écoulement (13).

2. Bac de récupération d'eau selon la revendication 1, caractérisé en se qu'il est disposé, dans le canal transversal (8), en position contigue à l'arête d'écoulement (12) franchie transversalement, en tant que zone d'écoulement en surface (15), un premier corps de guidage de courant (6), pratiquement horizontal, présentant un élargissement conique dans la direction d'écoulement de l'eau, pratiquement jusqu'à une extrémité (de changement de direction de l'eau) (B) du canal transversal (8).

3. Bac de récupération d'eau selon la revendication 2, caractérisé en ce qu'il est disposé, dans le canal transversal (8), après l'extrémité (de changement de direction de l'eau) (B), en tant que zone supplémentaire d'écoulement en surface (15), un autre corps de guidage de courant (16) qui est pratiquement horizontal et qui se raccorde au plan incliné d'écoulement (13).

4. Bac de récupération d'eau selon la revendication 3, caractérisé en ce que le premier et le second corps de guidage de courant (6, 16) sont placés pratiquement à la même hauteur.

5. Bac de récupération d'eau selon la revendication 3 ou 4, caractérisé en ce que le premier et le second corps de guidage de courant (6, 16) ainsi que le plan incliné d'écoulement (13) sont moussés du côté inférieur.

6. Bac de récupération d'eau selon l'une quelconque des revendications 3 à 5, caractérisé en ce que le premier et le second corps de guidage de courant (6, 16) ainsi que le plan incliné d'écoulement (13) sont réalisés d'une seule pièce.

7. Bac de récupération d'eau selon l'une quelconque des revendications 1 à 6, caractérisé en ce que le plan incliné d'écoulement et la zone de stabilisation du courant (10) sont placés dans la région de l'extrémité (A) du canal transversal du côté de l'évacuation d'eau (11), à l'opposé de l'extrémité (de changement de direction de l'eau) (B) du canal transversal (8).

8. Bac de récupération d'eau selon la revendication 7, caractérisé en ce que le plan incliné d'écoulement (13) et la zone de stabilisation du courant (10) sont réalisés avec une forme qui s'élargit en cône dans la direction d'écoulement de l'eau.

9. Bac de récupération d'eau selon l'une quelconque des revendications 1 à 8, caractérisé en ce que l'évacuation d'eau (11) est un entonnoir de trop-plein.

10. Bac de récupération d'eau selon l'une quelconque des revendications 1 a 9, caractérisé en ce que l'arête d'écoulement (12) franchie transversalement fait partie, dans le bac de récupération d'eau (1), d'une troisième zone d'écoulement en surface pratiquement horizontale ou d'un troisième corps de guidage de courant (5) pratiquement horizontal qui s'étend transversalement par rapport au canal transversal (8).

11. Bac de récupération d'eau selon l'une quelconque des revendications 1 à 10, caractérisé en ce que le canal transversal (8) est réalisé sous forme de bac parallèlépipédique ouvert comportant une cloison verticale (14) qui sépare la zone de stabilisation du courant (10) et le plan incliné d'écoulement (13) de la première zone d'écoulement en surface (15) ou du premier corps de guidage de courant (6).
